# EUROPEAN PATENT APPLICATION

(11) **EP 0 839 637 A1**
(43) Date of publication of application: **06.05.1998**
(21) Application number: 96115919.1
(22) Date of filing: 04.10.1996
(51) Int. Cl.: B29D 31/515

(54) **Production method for EVA insoles with peripheral borders**

(71) Applicant: Chi, Cheng-Hsian, Taichung, Taiwan, R.O.C. (TW)
(72) Inventor: Chi, Cheng-Hsian, Taichung, Taiwan, R.O.C. (TW)
(74) Representative: Helms, Joachim, Dipl.-Ing. Patentanwalt

(57) **Abstract**

The present invention relates to a method for producing foamed insoles with peripheral borders, comprising the steps of: preparing a mixture of ethylene vinyl acetate (EVA) and foaming component; rolling out the mixture into a plate (20); cutting insole castings (22) out of the plate (20), which are scaled down as compared to the size of the foamed insoles (25); foaming the insole castings by heat in a mold, thus producing single-bodied foamed insoles (25), the peripheral and lower surface of which is provided with a relief pattern (251) and the peripheral border (252) of which rises above the upper surface with a smooth, rounded transistion to the upper surface; and attaching an ornamental strip (30) on the peripheral surface.

## Description

### BACKGROUND OF THE INVENTION

### 1. Field of the Invention

The present invention relates to a method for producing ethylene vinyl acetate (EVA) insoles with peripheral borders, particularly to a method, in which EVA and foaming plastics material is cut into the desired, still scaled down shape, then foamed by heating and on the periphery covered by an ornamental strip.

### 2. Description of Related Art

The sole of a common sports shoe comprises an insole layer and a wear-resistant rubber layer, glued to the bottom side of the insole layer. The material of the insole layer is elastic and durable and is a well-defined mixture of ethylene vinyl acetate (EVA) with CAP as a foaming component and DCP as a binder. The material is stirred, foamed by heating and cut into shape, forming insoles, which in use absorb shocks and are comfortable to wear.

Different production methods for insoles of sports shoes lead to different gluing structures and have a strong influence on the quality and cost of production. Taiwan Patent No. 157875 discloses a production method for multicolored, convex insoles. Referring to Figs. 1 to 3, according to this method, a plate 10 with a wedge-like cross-section is prepared, from which insoles 12 are cut out, with the heels towards the thick end and the toes towards the thin end of the plate 10. The whole process, however, is complicated. The periphery needs to be grinded, before a ornamental strip 15 can be glued to it. After cutting and grinding the insoles 12 a lot of material has to be thrown away, leading to waste of material and extra cost of disposal. Furthermore, the process of cutting and grinding weaken the durability of the insole material. Finally, because the periphery of the insole 12 has no relief and the top surface and the periphery intersect at a right angle without transition, it is difficult to fix the ornamental strip 15 to the insole 12.

### SUMMARY OF THE INVENTION

It is therefore an object of the present invention to provide a production method for insoles that avoids the weakening of the insole caused by cutting and grinding.

A further object of the present invention is to provide a production method for insoles that re-uses cut out material and thus minimizes waste.

In the production method of the present invention, EVA and foaming material are mixed and rolled out into a flat form. Then the scaled down shapes of insoles are cut out and foamed by heating in a mold of the final size. The foamed insoles are thicker at the heel end. Before foaming them, rest material from the cutting process may be added, or the insoles may be cut out from wedge-shaped material. Furthermore, the periphery of the insole is formed as a border rising above the upper surface of the insole, such that an ornamental strip is attachable.

The present invention can be more fully understood by reference to the following description and accompanying drawings.

### BRIEF DESCRIPTION OF THE DRAWINGS

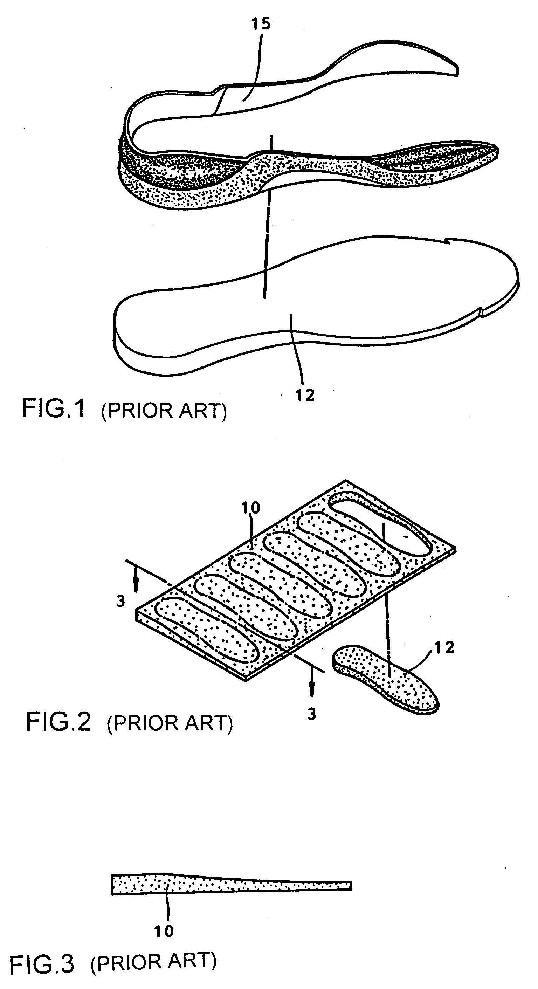

Fig. 1 (prior art) is a perspective view of the cut out insole and the perpheral ornamental strip.

Fig. 2 (prior art) is a schematic illustration of the plate with the insoles to be cut out.

Fig. 3 (prior art) is a sectional view of the plate cut along line 3 - 3 of Fig. 2.

Fig. 4 is a flowchart of the production process of the present invention in a first embodiment.

Fig. 5 is a schematic illustration of the plate of the present invention with the scaled down insoles to be cut out.

Fig. 6 is a perspective view of the cut out insole and the perpheral ornamental strip of the present invention.

Fig. 7 is a flowchart of the production process of the present invention in another embodiment.

### DETAILED DESCRIPTION OF THE PREFERRED EMBODIMENTS

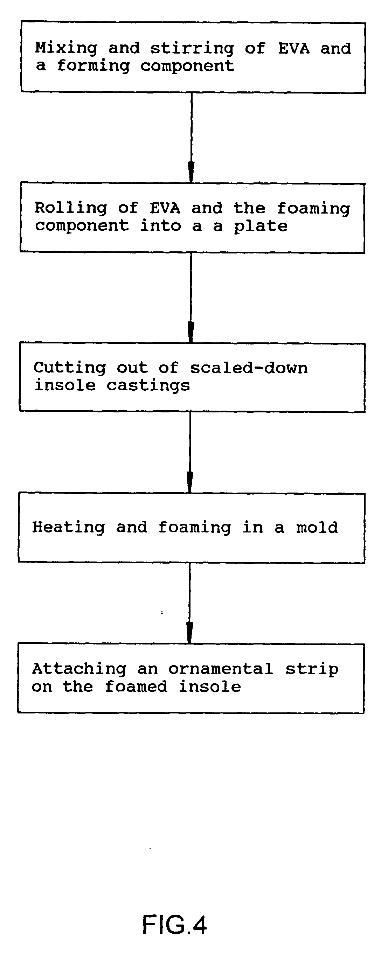

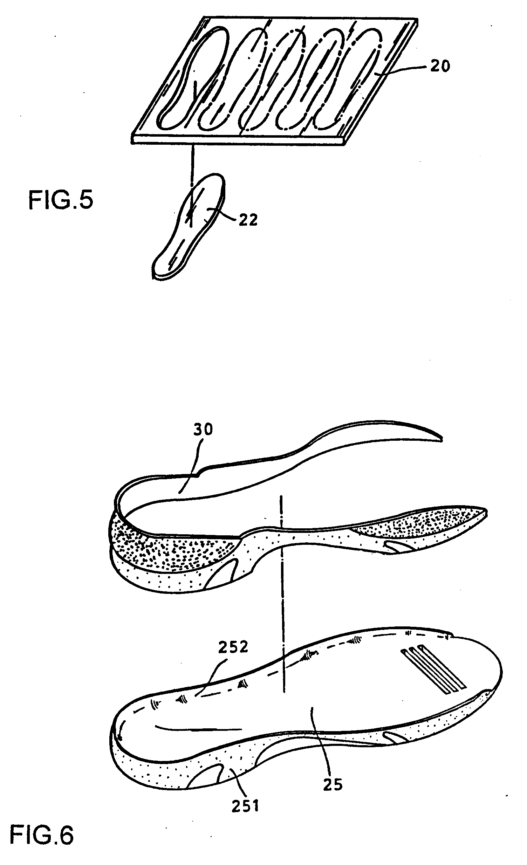

Referring to Figs. 4, 5, and 6, in the production process of the present invention, a mixture of well-defined parts of ethylene vinyl acetate (EVA), CAP as a foaming component and DCP as a binder is prepared and stirred. The material is then rolled into a plate 20. From the plate 20, insole castings 22 of the shape of insoles, but of a smaller size, are cut out. The heel end of the final insole is thicker than the front end. To achieve this, rest material from the cutting process is added to the heel end of the insole casting 22, or the insole castings 22 are cut out from a plate 20 with a wedge-like cross-section, the heel of the insole castings 22 pointing to the thick end of the plate 25. Then the insole castings 22 are each put into a mold and foamed under a heat of 180°C, so as to form the foamed insoles 25. The mold has on its periphery and its lower side a relief pattern, so the surface of the foamed insole 25 directly is given a corresponding relief pattern 251 without any need for grinding work. Furthermore, a peripheral edge 252 of the foamed insole 25 rises above the level of the upper surface thereof with a smooth, rounded transistion to the upper surface. On the outside of the peripheral edge 252 an ornamental strip 30 is attached by gluing. On the buttom side of the foamed insole 25 a wear-resistant rubber sole is glued.

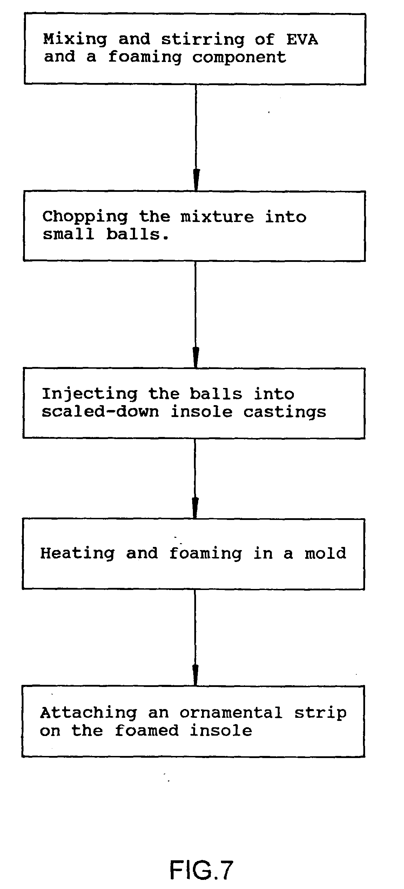

Referring to Fig. 7, in another embodiment of the present invention, a mixture of EVA and a foaming component is prepared and stirred, then chopped to small balls. The insole casting 22 is made by injection die-casting. Then the insole casting 22 is heated and expands by foaming to the foamed insole 25. On the periphery of the insole 25 an ornamental strip 30 is attached by gluing.

In the production method of the present invention, scaled down insole castings are made either by cutting or by injection die-casting. The final insoles are made by foaming the scaled down insole castings. The foamed insoles do not need to be cut or grinded. After the foaming process their surface is ready, and their structure will not be weakened by further working.

## Claims

1. A method for producing foamed insoles with peripheral borders, comprising the steps of:
preparing a mixture of ethylene vinyl acetate (EVA) and a foaming component;
rolling out said mixture into a plate;
cutting insole castings out of said plate, said insole castings having a front end and a heel end, said insole castings being scaled down as compared to the size of said foamed insoles;
heating said insole castings in a mold of a temperature of 180°C, thereby foaming said insole castings, thus producing said foamed insoles, said foamed insoles consisting of a single body with a peripheral border and having an upper surface, a lower surface and a peripheral surface on said peripheral border, said lower surface and said peripheral surface being provided with a relief pattern, said peripheral border rising above said upper surface with a smooth, rounded transistion to said upper surface; and
attaching an ornamental strip on said peripheral surface.

2. A method for producing foamed insoles with peripheral borders according to claim 1, wherein rest material from said cutting step is added to said insole casting on said heel side before said heating step.

3. A method for producing foamed insoles with peripheral borders, comprising the steps of:
making a mixture of ethylene vinyl acetate (EVA) and a foaming component;
chopping said mixture into small balls;
die-casting said balls into insole castings, said insole castings being scaled down as compared to the size of said foamed insoles;
heating said insole castings in a mold, thereby foaming said insole castings, thus producing said foamed insoles, said foamed insoles consisting of a single body and having a peripheral surface; and
attaching an ornamental strip on said peripheral surface.
